# EUROPÄISCHE PATENTSCHRIFT

(11) **EP 3 192 418 B1**
(45) Veröffentlichungstag und Bekanntmachung des Hinweises auf die Patenterteilung: **09.05.2018**
(21) Anmeldenummer: 17158592.0
(22) Anmeldetag: 14.10.2014
(51) Int. Cl.: A47J 43/07

(54) **ELEKTROMOTORISCH BETRIEBENE KÜCHENMASCHINE**
KITCHEN APPLIANCE OPERATED BY ELECTRIC MOTOR
ROBOT MÉNAGER FONCTIONNANT AVEC UN MOTEUR ÉLECTRIQUE

(30) Priorität: 24.10.2013 DE 102013111720; 28.01.2014 DE 102014100944; 22.09.2014 DE 102014113623
(43) Veröffentlichungstag der Anmeldung: 19.07.2017
(62) Teilanmeldung aus: 14787126.3
(73) Patentinhaber: Vorwerk & Co. Interholding GmbH, 42275 Wuppertal (DE)
(72) Erfinder: Van der Gaag, Velina, 42289 Wuppertal (DE); Hoffmann, Sabrina, 42653 Solingen (DE); Sernecki, Miron, 58097 Hagen (DE)
(74) Vertreter: Müller, Enno

(56) Entgegenhaltungen:
- WO-A1-2014/083029
- US-A1- 2003 179 645
- US-A1- 2005 068 846
- US-A1- 2010 270 285

## Beschreibung

Die Erfindung betrifft eine elektromotorisch betriebene Küchenmaschine mit einem Rührgefäß und einem Rührwerk in dem Rührgefäß, gegebenenfalls mit einer Heizung, weiter mit einem flüchtigen oder nicht flüchtigen Speicher, in dem zur Anwendung nutzbare Dateien speicherbar sind, wobei weiter in der Küchenmaschine ein Lautsprecher vorgesehen ist und eine Datei zur Geräuschentwicklung mittels des Lautsprechers nutzbar ist, bspw. zur Sprach- oder Musik- oder Klangausgabe.

Küchenmaschinen der in Rede stehenden Art sind bekannt. Sie dienen insbesondere im Haushaltsbereich zur Bearbeitung von Lebensmitteln, weiter bevorzugt auch zur Herstellung von Speisen. Hierzu sind derartige Küchenmaschinen mit einem bevorzugt aus der Küchenmaschine herausnehmbaren Gefäß versehen, in welchem die Zubereitung erfolgt. Ein solches Gefäß weist in einer bekannten Ausgestaltung bodenseitig ein Rührwerk auf, welches über einen in der Küchenmaschine vorgesehenen Elektromotor antreibbar ist. Weiter ist diesbezüglich bekannt, das Rührgefäß unmittelbar oder auch die hierin befindlichen Lebensmittel mittelbar zu heizen, insbesondere zum entsprechenden Garen von Lebensmitteln.

Beispielhaft wird hier auf die DE 10210442 A1 verwiesen.

Darüber hinaus sind Küchenmaschinen bekannt, welche einen flüchtigen oder auch nicht flüchtigen Speicher aufweisen, in welchem Speicher Dateien speicherbar sind. Solche Dateien werden beispielsweise zur Rezeptabarbeitung genutzt, indem weiter beispielsweise nach einem entsprechenden Befehlsaufruf durch die aufgerufene Datei verschiedene Parameter, wie beispielsweise eine Rührwerk-Drehzahl und/ oder eine Heiztemperatur und/ oder eine Zeitspanne eingestellt werden.

Aus der US 2003/0179645 A1 ist eine Küchenmaschine bekannt, bei welcher während des Betriebs der Küchenmaschine, um hierauf hinzuweisen, ein Geräusch ausgegeben wird. Aus der US 2005/0068846 A1 ist es bekannt, bei einer Küchenmaschine ein Geräusch abzugeben, wenn eine vorprogrammierte Routine vollständig abgearbeitet ist, Zutaten hinzugegeben werden sollen, oder wenn ein Benutzer einen Betätigungsknopf drückt.

Die US 2010/0270285 A1 offenbart eine Küchenmaschine mit einer Geräuschausgabe, nämlich einer Sprachausgabe. Vergleichbares ist auch noch aus der WO 2014/083029 A1 bekannt.

Im Hinblick auf den vorgenannten Stand der Technik beschäftigt sich die Erfindung mit der Aufgabenstellung, eine Küchenmaschine mit einer benutzerorientierten Geräuschausgabe, bspw. Sprach- oder Musik- oder Klangausgabe, anzugeben.

Diese Aufgabe ist beim Gegenstand des Anspruches 1 gelöst, wobei darauf abgestellt ist, dass die Küchenmaschine (1) eine Geräuschunterdrückungseinrichtung aufweist, die in Abhängigkeit von einer Geräuschentwicklung der Küchenmaschine (1) Gegengeräusche erzeugt.

Hinsichtlich der Geräuschunterdrückungseinrichtung in der Küchenmaschine werden die Gegengeräusche über den in der Küchenmaschine vorgesehenen Lautsprecher ausgegeben. Hierbei wird ein sogenannter Antischall (active noise reduction-ANR) genutzt.

Weiter kann vorgesehen sein, dass die Ausgabe an eine voreingestellte Zeitauswahl hinsichtlich einer Rührwerks- und/ oder Heizaktivität gekoppelt ist und innerhalb der gewählten Zeitspanne zu einem bestimmten Zeitpunkt erfolgt.

Weiter kann vorgesehen sein, dass bei einer bei laufendem Rührwerk erfolgenden Sprachausgabe eine Drehzahl des Rührwerks reduziert wird.

Auch kann vorgesehen sein, dass die Küchenmaschine eine Erkennungseinrichtung aufweist, zur Erkennung eines menschlichen Nutzers, wobei zugleich bezogen auf eine Draufsicht eine Erkennung der Position des Nutzers relativ zu der Küchenmaschine durchführbar ist.

Es kann weiter vorgesehen sein, dass durch Ansprechen eines in der Küchenmaschine angeordneten Bewegungsmelders eine Ausgabe auslösbar ist.

Eine Informationsübertragung von der Küchenmaschine zu dem Benutzer ist auch dann möglich, wenn beispielsweise kein Sichtkontakt zu der Küchenmaschine besteht. Die Informationsübertragung erfolgt zufolge der Geräuschausgabe akustisch. Hierzu ist in der Küchenmaschine der mindestens eine Lautsprecher angeordnet. In weiterer Ausgestaltung können mehrere derartiger Lautsprecher vorgesehen sein, über welche zeitgleich, alternativ zeitversetzt ein entsprechendes Geräusch abgegeben wird. Auch besteht die Möglichkeit bei Anordnung mehrerer Lautsprecher, über jeden Lautsprecher ein gesondertes Geräusch auszugeben.

Darüber hinaus ist insbesondere durch die Möglichkeit einer Sprachausgabe eine Informationsübertragung für behinderte Benutzer, insbesondere sehbehinderte Benutzer gegeben.

Eine Sprachausgabe kann hierbei derart gestaltet sein, dass dem Benutzer beispielsweise hinterlegte Anweisungen zum Bedienen der Küchenmaschine und/ oder zu einer Rezeptabarbeitung erteilt werden, gegebenenfalls auch Statusberichte. Auch kann als Datei zur Geräuschentwicklung ein Musikstück oder dergleichen hinterlegt sein, beispielsweise im MP3-Format. Eine Musikausgabe kann beispielsweise während eines Abarbeitungsvorganges der Küchenmaschine erfolgen. Klangausgaben sind beispielsweise ein Klingelton oder ein Gongton.

In einer weiter bevorzugten Ausgestaltung ist vorgesehen, dass die Ausgabe über den Lautsprecher durch Berührung oder Betätigung eines Bedienungselementes der Küchenmaschine auslösbar ist. Derartige Bedienungselemente dienen insbesondere der mittelbaren oder unmittelbaren Ansteuerung von Elektrokomponenten der Küchenmaschine, beispielsweise der Ansteuerung einer Heizung oder eines Rührwerks in dem Rührgefäß, darüber hinaus weiter beispielsweise zur Einstellung einer Zeitdauer der Aktivierung des Rührwerks und/ oder der Heizung. Auch ist ein Bedienungselement im Sinne der Erfindung ein Touch-Display, wie dieses beispielsweise aus der DE 10 2011 052 405 A1 bekannt ist. Über ein solches Touch-Display ist bevorzugt sowohl eine Ansteuerung der Elektrokomponenten ermöglicht wie auch weiter bevorzugt eine hinterlegte Rezeptauswahl.

Die Ausgabe des Geräuschs ist hierbei bevorzugt auslösbar infolge Berühren oder Betätigen des Bedienungselementes. So kann beispielsweise mit Betätigung eines Bedienungselementes zum Einschalten des Rührwerkes ein Warnhinweis kombiniert sein, der auf einen gegebenenfalls nicht verriegelten Deckel für das Rührgefäß hinweist. Dieser Warnhinweis kann beispielsweise eine konkrete Sprachausgabe sein, alternativ eine Klangausgabe in Form eines Warntons.

Weiter kann beispielsweise in Abhängigkeit von einem gewählten Rezept aus der Rezeptdatenbank eine hiermit verknüpfte Musikdatei ausgegeben werden. Außer den diesbezüglichen Informationen über neue Rezepte oder verwandte Rezepte, weiter über Rezeptvarianten sind beispielsweise auch Hintergrundinformationen zu Rezepten und Zutaten möglich. Darüber hinaus sind insbesondere im Zusammenhang mit einer Sprachausgabe Anekdoten bei bestimmten Rezepten möglich. Hintergrundinformationen können zum Beispiel solche sein, die über das Anbaugebiet von bestimmten Zutaten, etwa Gewürzen berichten oder über bestimmte Auswirkungen auf die menschliche Physis von bestimmten Zutaten berichten.

Bevorzugt werden Hintergrundinformationen beispielsweise in Zeiträumen, in welchen die Küchenmaschine mit der Zubereitung (etwa einem Garvorgang oder einer Aufheizphase) von Lebensmitteln beschäftigt ist oder auch in Zeiten, in welchen der Nutzer eigene manuelle Vorgänge außerhalb der Küchenmaschine durchführen muss, ausgegeben. Als Informationen können beispielsweise auch Tipps zu Rezepten oder zur Reinigung oder zur verbesserten Bedienung des Gerätes ausgegeben werden.

In weiter bevorzugter Ausgestaltung werden Informationen, beispielsweise Tipps in Form von Sprachausgaben, insbesondere bezüglich einer allgemeinen Bedienung mit zunehmender Bedienungshäufigkeit weniger ausgegeben. Entsprechend erfolgt hier eine anwendungs- beziehungsweise bedienungsabhängige Speicherung der Häufigkeit von, von dem Benutzer vorgenommenen Bedienungen der Küchenmaschine. Gegebenenfalls aufgeteilt nach Bedienungen oder Benutzungen des Rührgefäßes bei einer Turbofunktion, bei einer normalen Rührdrehzahl und/ oder bei Benutzung des Varomaaufsatzes.

Auch sind Geräuschausgaben, insbesondere Sprachausgaben, auf Wunsch des Benutzers wiederholbar, so beispielsweise zufolge entsprechender Berührung oder Betätigung eines hierauf ausgelegten Bedienungselementes.

Bei regelmäßig durchgeführten beziehungsweise aufgerufenen Rezepten können etwaige Tipps in Form von Sprachausgaben im Laufe der Zeit weniger werden.

Hinsichtlich des Bewegungsmelders ist bevorzugt ein Näherungssensor in der Küchenmaschine, insbesondere im Bereich des Gehäuses der Küchenmaschine, vorgesehen, der weiter bevorzugt einen Nahbereich der Küchenmaschine überwacht. So ist bevorzugt ein Nahbereich von 100 cm oder weniger, weiter bevorzugt 50 cm oder weniger vorgesehen, in welchem Bereich eine Bewegung erfassbar ist. Eine solche Bewegung im überwachten Bereich führt bevorzugt zur Ausgabe eines Geräuschs in Form einer Sprach- oder Musik- oder Klangausgabe. Zufolge dieser Ausgestaltung wird entsprechend eine Geräuschausgabe veranlasst, wenn beispielsweise der Benutzer sich der Küchenmaschine nähert, um beispielsweise einen Garvorgang zu kontrollieren. So kann in einem solchen Moment beispielsweise per Sprachausgabe der nächste Zubereitungsschritt angekündigt werden und/ oder eine Restlaufzeit des Garprozesses.

In diesem Zusammenhang ist weiter von Vorteil, wenn, wie weiter bevorzugt, eine Ausgabe in Abhängigkeit von einem bestimmten Betriebszustand der Küchenmaschine auslösbar ist. Ein solcher Betriebszustand ist beispielsweise das Einschalten der Küchenmaschine, gegebenenfalls aus einem Stand-By-Zustand heraus. Weitere Betriebszustände im Sinne der Erfindung sind beispielsweise eine Rührphase oder eine Aufheizphase, darüber hinaus insbesondere eine solche Phase innerhalb eines Zeitfensters, welches programmtechnisch oder durch den Benutzer vorgegeben ist.

Auch kann ein solcher Betriebszustand eine Konfiguration der Küchenmaschine sein, so beispielsweise die alleinige Anordnung eines Deckels auf dem Rührgefäß oder die weitere Anordnung eines Gargefäßes auf dem Deckel des Rührgefäßes.

Unter Betriebszustand ist weiter bevorzugt auch ein aktueller Schritt innerhalb eines Rezeptablaufes zu verstehen, dies sowohl bei einem manuell durchführbaren Rezeptablauf, bei welchem der Benutzer nach jedem Rezeptschritt beispielsweise zufolge Bedienung eines Bedienungselementes den nächsten Rezeptschritt aufruft, als auch eine automatische Rezeptabfolge, bei welcher eine selbsttätige Rezeptabarbeitung insbesondere hinsichtlich der Auswahl von Drehzahl und/ oder Heiztemperatur erfolgt.

Die Ausgabe ist nach einer Ausgestaltung an eine voreingestellte Zeitauswahl hinsichtlich einer Rührwerks- und/ oder Heizaktivität gekoppelt und erfolgt weiter bevorzugt innerhalb dieser gewählten Zeitspanne zu einem bestimmten Zeitpunkt. So ist beispielsweise eine Restzeitansage durchführbar, über welche dem Benutzer beispielsweise ein Hinweis gegeben wird, dass der aktuell durchgeführte Vorgang in beispielsweise fünf Minuten beendet ist. Auch kann infolge des bestimmten Zeitpunktes innerhalb der voreingestellten Zeitauswahl ein Hinweis erfolgen, dass nach einer noch abzulaufenden Zeitspanne ein bestimmter Prozess durch den Benutzer eingeleitet werden muss (beispielsweise Hinzugabe von Zutaten). Die Zeitauswahl, innerhalb welcher Zeitspanne zu einem bestimmten Zeitpunkt die Ausgabe erfolgt, ist in bevorzugter Ausgestaltung durch den Benutzer durchgeführt; alternativ durch eine Programmsteuerung.

Hinsichtlich der bei laufendem Rührwerk erfolgenden Sprachausgabe unter Reduzierung der Drehzahl des Rührwerks kann in vorteilhafter Weise eine deutliche, hörbare Sprachausgabe erreicht werden. Die Absenkung der Drehzahl ist hierbei zeitlich begrenzt, insbesondere über die Zeit, die zur Ausgabe der Sprache nötig ist. Entsprechend erfolgt nach Beendigung der Sprachausgabe in bevorzugter Ausgestaltung eine selbsttätige Anhebung der Rührwerk-Drehzahl auf die vor der Reduzierung herrschende Drehzahl.

Bevorzugt wird die Geräuschentwicklung der Küchenmaschine unmittelbar an der Küchenmaschine und/ oder in unmittelbarer Umgebung zu der Küchenmaschine erfasst, wozu weiter bevorzugt ein Mikrofon oder dergleichen vorgesehen ist. Eine weiter bevorzugt vorgesehene Auswertungselektronik ruft entsprechend der Auswertung der aufgenommenen Geräusche eine Datei zur Klangausgabe auf. Die Auswertungselektronik ist in einer Ausgestaltung in der Küchenmaschine vorgesehen. Auch eine extern vorgesehene Auswertungselektronik ist diesbezüglich möglich, welche in der Lage ist, mit der Küchenmaschine zu kommunizieren. Die Geräuschunterdrückung kann sich insbesondere auf ein Motorengeräusch und/ oder ein Rührwerkgeräusch und/oder ein Rührgefäßgeräusch beziehen. Das Rührgefäßgeräusch kann insbesondere durch Sekundäreffekte verursacht sein. Ein Sekundäreffekt kann durch das Schleudern von Festkörpern, beispielsweise gefrorenen Himbeeren, durch das Rührwerk an die Rührgefäßwandung gegeben sein.

Jedenfalls erfolgt eine Geräuschunterdrückung der weiteren Geräusche bevorzugt bei einer Sprach- oder Musik- oder Klangausgabe, insbesondere bei einer Informationsausgabe für den Benutzer. Eine etwa vorgesehene Auswertungselektronik ist bevorzugt darauf eingestellt, dass derartig bewusst ausgegebene Geräusche nicht zu einer angepassten Geräuschunterdrückung führen.

Bezüglich der Erkennungseinrichtung können insbesondere personifizierte Meldungen, bspw. Begrüßungstexte, ausgegeben werden. Zur Erkennung der Position des Nutzers relativ zu der Küchenmaschine dient in weiter bevorzugter Ausgestaltung eine elektronische Kamera, welche bevorzugt in der Küchenmaschine, weiter insbesondere im Gehäuse der Küchenmaschine aufgenommen ist. Diese Kamera liefert Bilder an eine in der Küchenmaschine vorgesehene Gesichtserkennung mit Gesichtsdatenbank. Eine solche Gesichtserkennung ist beispielsweise aus der DE 2012 111 602 A1 bekannt. Mittels einer solchen Gesichtserkennung wird zunächst ein menschlicher Nutzer insbesondere in einem vorgegebenen Erfassungsbereich erkannt, weiter darüber hinaus zufolge Abgleich mit einer Gesichts-Datenbank die betreffende Person identifiziert. Zufolge dieser Ausgestaltung kann die, die Küchenmaschine bedienende Person quasi persönlich angesprochen werden, indem beispielsweise eine angepasste Sprachdatei ausgegeben wird.

Die Ausgabe des Geräuschs, insbesondere der Sprache bei einer Erkennungseinrichtung, ist in weiter bevorzugter Ausgestaltung hinsichtlich der Abstrahlrichtung bezogen auf eine Nullachse einstellbar. So ist die Abstrahlrichtung, jedenfalls bezogen auf eine Horizontalachse, einstellbar, so dass entsprechend eine auf den Nutzer gerichtete Schallausbreitung insbesondere der Sprachausgabe erreichbar ist. Hierzu wird in weiter bevorzugter Ausgestaltung ein entsprechend gerichteter Lautsprecher bei Anordnung mehrerer Lautsprecher angesteuert.

Darüber hinaus ist bevorzugt eine bi-direktionale Verbindung zwischen der Küchenmaschine und dem Benutzer vorgesehen, so beispielsweise in der Art, dass der Benutzer eine in einer Datenbank hinterlegte und somit bekannte Frage stellt und die Küchenmaschine quasi antwortet oder in der Art, dass der Benutzer Befehle ausspricht, die die Küchenmaschine wiederholt und nach einer verbalen Bestätigung ausführt.

Zudem ist bevorzugt eine Geräuschausgabe auch im Stand-By-Betrieb der Küchenmaschine gegeben, so beispielsweise zur Begrüßung des sich annähernden Benutzers.

Zufolge einer oder mehrerer der vorbeschriebenen Merkmale ist eine außerhalb von Betriebsgeräuschen Eigengeräusche hervorrufende Küchenmaschine angegeben, welche zufolge einer Sprach- oder Musik- oder Klangausgabe insbesondere dem Benutzer Informationen übermittelt. Diese gezielt ausgegebenen Geräusche können in weiterer Ausgestaltung auch über Funkwellen dem Benutzer in entfernten Räumen zugesandt werden, welcher Benutzer in diesem Fall einen entsprechenden Empfänger mit Lautsprecher oder beispielsweise Kopfhörer trägt.

Nachstehend ist die Erfindung anhand der beigefügten Zeichnung erläutert, die aber lediglich ein Ausführungsbeispiel darstellt. Auf der Zeichnung zeigt:

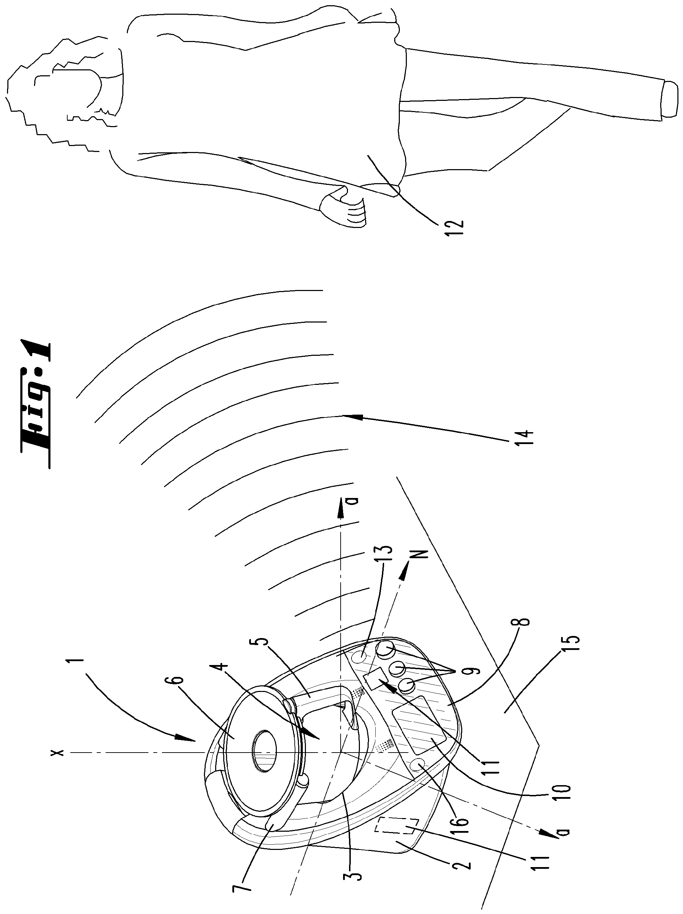

- Fig. 1: in schematischer perspektivischer Darstellung eine Küchenmaschine in Betriebsstellung mit einem der Küchenmaschine zugewandten menschlichen Nutzer.

Dargestellt und beschrieben ist eine elektromotorisch angetriebene Küchenmaschine 1. Hierbei handelt es sich bevorzugt um eine Küchenmaschine gemäß der DE 10210442 A1 und/ oder DE 102010037892 A1 und/ oder DE 102010060650 A1.

Die Küchenmaschine 1 weist ein Gehäuse 2 auf. In diesem Gehäuse 2 ist bevorzugt eine Steuerelektronik für die Küchenmaschine 1 aufgenommen. Weiter weist das Gehäuse 2 eine Rührgefäß-Aufnahme 3 auf. In dieser steht insbesondere in der Nutzungsstellung der Küchenmaschine 1 ein Rührgefäß 4.

Das Rührgefäß 4 ist kannenartiger Gestalt, bevorzugt aufweisend einen Handgriff 5.

Weiter bevorzugt ist die Rührgefäß-Öffnung insbesondere in der Nutzungsstellung von einem Deckel 6 übergriffen. Letzterer ist weiter bevorzugt an dem Gehäuse 2 festlegbar, wozu aktivierbare Festlegungsmittel 7 vorgesehen sind.

In dem Rührgefäß 4 ist weiter bevorzugt bodenseitig ein nicht dargestelltes Rührwerk angeordnet. Dieses ist unter Zwischenschaltung einer lösbaren Kupplung verbunden mit einem nicht dargestellten Elektromotor in der Küchenmaschine 1.

Weiter bevorzugt ist das Rührgefäß 4 beheizbar, insbesondere zufolge Ausgestaltung des Rührgefäß-Bodens als elektrische Widerstandsheizung.

Das Gehäuse 2 formt weiter bevorzugt ein Bedienfeld 8 aus. In diesem Bedienfeld 8 sind bevorzugt Stellschalter 9 vorgesehen, welche Stellschalter 9 insbesondere zur Einstellung einer Rührwerk-Drehzahl und/ oder einer Heiztemperatur und/ oder einer Zeitdauer, über welche das Rührwerk und/ oder die Heizung aktiviert ist, dienen.

Darüber hinaus ist in dem Bedienfeld 8 in der dargestellten Ausführungsform ein Display 10 vorgesehen, insbesondere zur Anzeige der eingestellten Parameter, wie Rührwerk-Drehzahl, Heiztemperatur und/ oder Zeitdauer.

In weiterer Ausführungsform ist das Display 10 als Touch-Display ausgebildet. Über ein solches Touch-Display 10 kann der Benutzer gegebenenfalls ein Rezept aufrufen zur gegebenenfalls selbsttätigen Rezeptabarbeitung durch die Küchenmaschine 1.

Zudem ist bevorzugt in dem Gehäuse 2 ein nicht flüchtiger Speicher vorgesehen, in welchem Dateien zur Geräuschentwicklung abgespeichert sind.

Zur Geräuschausgabe ist ein Lautsprecher 11 vorgesehen. Dieser ist bevorzugt im Bereich des Bedienfeldes 8, weiter insbesondere in einer Außenfläche des Gehäuses 2 integriert.

Wie beispielhaft in der Darstellung gezeigt, kann der Lautsprecher 11 auch seitlich im Gehäuse 2 angeordnet sein, darüber hinaus auch eine Mehrzahl von Lautsprechern 11.

Über den Lautsprecher 11 werden Geräusche, insbesondere Sprache, Musik oder Klanggeräusche ausgegeben, die einem menschlichen Nutzer 12 insbesondere als Information dienen soll. Alternativ dient das Geräusch zur Unterdrückung oder zumindest Dämpfung der durch die Küchenmaschine 1 im Betrieb erzeugten Geräusche, weiter insbesondere hervorgerufen durch das Rührwerk.

Klanggeräusche sind beispielsweise ein Gong oder eine Klingel. Unter Musikausgabe ist im Sinne der Erfindung die Ausgabe von melodischen Klängen zu verstehen, weiter bevorzugt Teile von Musikstücken oder auch ganze Musikstücke.

Neben einzelner Sprach- oder Musik- oder Klangausgaben können auch kombinierte Ausgaben erfolgen, so beispielsweise eine Sprachausgabe, welche mit Musik hinterlegt ist. So können über einen Melodieton hinaus konkrete, differenzierte Informationen für den Nutzer 12 vermittelt werden. Auch sind Sprachausgaben in unterschiedlichen Sprachen möglich, weiter auch durch verschiedene Stimmen. Hierzu ist bevorzugt eine Vorauswahl durch den Nutzer 12 gegeben, beispielsweise zufolge entsprechender Befehlseingabe über das Touch-Display 10.

Darüber hinaus ist im Zusammenhang mit einer entsprechenden Sprach- oder Stimmauswahl vorgesehen, dass eine Nutzererkennung vorgesehen ist. Hierzu ist eine Erkennungseinrichtung vorgesehen, insbesondere in Form einer beispielsweise in dem Bedienfeld 8 vorgesehenen Kamera 13. Diese ist bevorzugt gekoppelt mit einer Gesichtserkennung gemäß der DE 102012111602 A1.

In Abhängigkeit vom erkannten Nutzer 12 wird in bevorzugter Ausgestaltung eine vorausgewählte Sprache und/ oder Stimme ausgegeben. Darüber hinaus ist in diesem Zusammenhang auch möglich, den Nutzer 12 persönlich anzusprechen, beispielsweise zufolge Sprachausgabe des Namens innerhalb eines Begrüßungstextes.

Bei einer Rezeptauswahl können Informationen über neue Rezepte oder verwandte Rezepte, weiter auch über Rezeptvarianten ausgegeben werden.

Wahlweise sind auch Anekdoten bei bestimmten Rezepten ausgebbar, wie weiter bevorzugt auch Informationen und Tipps zur Vorbereitung und Zubereitung der innerhalb des Rezeptes vorgesehenen Zutaten. Auch sind beispielsweise in Abhängigkeit vom gewählten Rezept über die Sprachausgabe Vorschläge für Beilagen oder dergleichen ausgebbar.

Ist eine Zeitauswahl voreingestellt, beispielsweise hinsichtlich des Rührwerks und/ oder der Heizung, kann innerhalb des gewählten Zeitfensters eine Sprachausgabe über die verbleibende Restzeit erfolgen. Bevorzugt erfolgt eine solche Ausgabe automatisch zu vorbestimmten Restzeiten, beispielsweise 5 Minuten, 2 Minuten oder 1 Minute vor Ablauf der gewählten Zeit. Alternativ oder auch kombinativ hierzu kann eine Sprachausgabe zur Zeitansage auch durch eine Befehlseingabe durch den Nutzer 12 erfolgen, beispielsweise zufolge Betätigung eines Tasters oder Schalters der Küchenmaschine 1.

Insbesondere bei einer Sprachausgabe, darüber hinaus aber auch bei einer zeitlich begrenzten Musik- oder Klangausgabe ist in bevorzugter Ausgestaltung eine Reduzierung der Drehzahl des Rührwerks vorgesehen, welche selbsttätig durchgeführt wird.

Weiter bevorzugt ist die Ausrichtung (Pfeil a) des Schalls 14, insbesondere bei einer Sprachausgabe, auf den Standort des Nutzers 12 ausgerichtet. Hierzu wird in einer Ausgestaltung die Kamera 13 genutzt. In weiterer alternativer Ausgestaltung ist hierzu eine Sender/Empfängereinheit vorgesehen, welche Empfängereinheit den Winkel der eintreffenden Reflektionsschallwellen erfasst. Insbesondere in Abhängigkeit zu einer Nullachse N wird zufolge des ermittelten Winkels der oder die in die betreffende Richtung weisende Lautsprecher 11 zur Sprachausgabe aktiviert oder stärker angesteuert.

Die Nullachse N verläuft bevorzugt senkrecht zu einer Rührgefäßachse x, weiter bevorzugt in einer Parallelebene zur Aufstellfläche der Küchenmaschine 1. In dem dargestellten Ausführungsbeispiel verläuft die Nullachse N ausgehend von der Rührgefäßachse x unter radialer Ausrichtung, den Bereich des Rührgefäß-Handgriffes 5 und das Bedienfeld 8 in einer Vertikalprojektion auf die Aufstellfläche 15 schneidend.

Auch ist eine Ausgabe von Informationsgeräuschen abhängig von der Entfernung zwischen der Küchenmaschine 1 und dem Nutzer 12. So wird bevorzugt eine derartige Ausgabe generell oder auch beschränkt auf bestimmte Informationen nur freigegeben, wenn der Nutzer 12 sich in unmittelbarer Nähe der Küchenmaschine 1 aufhält. Hierzu ist in weiter bevorzugter Ausgestaltung ein Bewegungsmelder 16 vorgesehen, welcher in der Küchenmaschine 1, weiter bevorzugt im Bereich des Bedienfeldes 8 angeordnet ist. Dieser Bewegungsmelder 16 erfasst von diesem ausgehend bevorzugt einen Bereich von etwa 30 bis 100 cm, weiter bevorzugt etwa 50 cm, in welchem Bereich sich der Nutzer 12 aufhalten muss, um eine Geräuschausgabe gegebenenfalls auszulösen. So wird in vorteilhafter Weise verhindert, dass im größeren Abstand zur Küchenmaschine 1 sich aufhaltende Personen oder vorbeigehende Personen keine entsprechende Geräuschausgabe auslösen.

## Patentansprüche

1. Elektromotorisch betriebene Küchenmaschine (1) mit einem Rührgefäß (4) und einem Rührwerk in dem Rührgefäß (4), gegebenenfalls mit einer Heizung, weiter mit einem flüchtigen oder nicht flüchtigen Speicher, in dem zur Anwendung nutzbare Dateien speicherbar sind, wobei weiter in der Küchenmaschine (1) ein Lautsprecher (11) vorgesehen ist und eine Datei zur Geräuschentwicklung mittels des Lautsprechers (11) nutzbar ist, bspw. zur Sprach- oder Musik- oder Klangausgabe, **dadurch gekennzeichnet, dass** die Küchenmaschine (1) eine Geräuschunterdrückungseinrichtung aufweist, die in Abhängigkeit von einer Geräuschentwicklung der Küchenmaschine (1) Gegengeräusche erzeugt.

2. Küchenmaschine nach Anspruch 1, **dadurch gekennzeichnet, dass** bei einer bei laufendem Rührwerk erfolgenden Sprachausgabe eine Drehzahl des Rührwerks reduziert wird.

3. Küchenmaschine nach einem der vorhergehenden Ansprüche, **dadurch gekennzeichnet, dass** die Ausgabe an eine voreingestellte Zeitauswahl hinsichtlich einer Rührwerks- und/ oder Heizaktivität gekoppelt ist und innerhalb dieser gewählten Zeitspanne zu einem bestimmten Zeitpunkt erfolgt.

4. Küchenmaschine nach einem der vorhergehenden Ansprüche, **dadurch gekennzeichnet, dass** bei einer Sprach- oder Musik- oder Klangausgabe jedenfalls eine Geräuschunterdrückung der weiteren Geräusche erfolgt.

5. Küchenmaschine nach einem der vorhergehenden Ansprüche, **dadurch gekennzeichnet, dass** die Küchenmaschine (1) eine Erkennungseinrichtung aufweist, zur Erkennung eines menschlichen Nutzers (12), wobei zugleich bezogen auf eine Draufsicht eine Erkennung der Position des Nutzers (12) relativ zu der Küchenmaschine (1) durchführbar ist.

6. Küchenmaschine nach einem der vorhergehenden Ansprüche, **dadurch gekennzeichnet, dass** die Ausgabe hinsichtlich der Abstrahlrichtung für eine auf den Nutzer bezogene, gerichtete Schallausbreitung bezogen auf eine Nullachse (N) einstellbar ist.

7. Küchenmaschine nach einem der vorhergehenden Ansprüche, **dadurch gekennzeichnet, dass** durch Ansprechen eines in der Küchenmaschine (1) angeordneten Bewegungsmelders (16) eine Ausgabe auslösbar ist.

8. Küchenmaschine nach einem der vorhergehenden Ansprüche, **dadurch gekennzeichnet, dass** die Ausgabe über den Lautsprecher (11) durch Berührung oder Betätigung eines Bedienungselements der Küchenmaschine (1) auslösbar ist.

9. Küchenmaschine nach einem der vorhergehenden Ansprüche, **dadurch gekennzeichnet, dass** eine Ausgabe in Abhängigkeit von einem bestimmten Betriebszustand der Küchenmaschine (1) auslösbar ist.

## Claims

1. A food processor (1) driven by an electric motor, with an agitator vessel (4) and an agitator in the agitator vessel (4), if necessary with a heater, further with a volatile or nonvolatile memory, in which files useful for application can be stored, wherein a loudspeaker (11) is further provided in the food processor (1), and that a file be usable for sound generation by the loudspeaker (11), for example for voice or music or tone output, **characterized in that** the food processor (1) exhibits a noise cancellation device, which generates counter-noises as a function of the noise produced by the food processor (1).

2. The food processor according to claim 1, **characterized in that** the speed of the agitator is reduced given a voice output that takes place with the agitator running.

3. The food processor according to one of the preceding claims, **characterized in that** the output is coupled with a preset time selection in terms of an agitator and/or heater activity, and takes place within this selected period at a specific point in time.

4. The food processor according to one of the preceding claims, **characterized in that** the other noises are in any event cancelled during a voice or music or tone output.

5. The food processor according to one of the preceding claims, **characterized in that** the food processor (1) exhibits a recognition device for recognizing a human user (12), wherein the position of the user (12) relative to the food processor (1) can at the same time also be recognized in relation to a top view.

6. The food processor according to one of the preceding claims, **characterized in that** the output can be adjusted in terms of the radiation direction for a directed sound propagation relating to the user relative to a zero axis (N) .

7. The food processor according to one of the preceding claims, **characterized in that** an output can be triggered by the response of a motion detector (16) arranged in the food processor (1).

8. The food processor according to one of the preceding claims, **characterized in that** the output can be triggered via the loudspeaker (11) by touching or actuating a control element of the food processor (1).

9. The food processor according to one of the preceding claims, **characterized in that** an output can be triggered as a function of a specific operating state of the food processor (1).

## Revendications

1. Robot de cuisine électrique (1), comprenant une cuve de brassage (4) et un agitateur dans la cuve de brassage (4), et le cas échéant un dispositif de chauffage, et en outre une mémoire volatile ou non volatile dans laquelle peuvent être stockées des fichiers utilisables pour son utilisation, dans lequel est prévu en outre un haut-parleur (11) dans le robot de cuisine (1) et qu'un fichier est utilisable pour produire une émission sonore au moyen du haut-parleur (11), par exemple pour émettre de la voix ou de la musique ou des sons, **caractérisé en ce que** le robot de cuisine (1) comprend un dispositif de suppression de bruit lequel génère des contre-bruits en fonction des bruits produits par le robot de cuisine (1).

2. Robot de cuisine selon la revendication 1, **caractérisé en ce qu'**une vitesse de rotation de l'agitateur est réduite en cas d'émission de voix se produisant lors du fonctionnement de l'agitateur.

3. Robot de cuisine selon l'une des revendications précédentes, **caractérisé en ce que** l'émission est liée à une sélection de durée préréglée concernant une activité de l'agitateur et/ou de chauffage et **en ce qu'**elle se produise à un moment spécifique au cours de cet intervalle de temps sélectionné

4. Robot de cuisine selon l'une des revendications précédentes, **caractérisé en ce que** prend toujours place une suppression des autres bruits lors d'une émission de voix ou de musique ou de sons.

5. Robot de cuisine selon l'une des revendications précédentes, **caractérisé en ce que** le robot de cuisine (1) comprend un dispositif de reconnaissance pour reconnaitre un utilisateur humain (12), dans lequel est susceptible d'être réalisée concurremment, en référence à une vue de dessus, une reconnaissance de la position de l'utilisateur (12) par rapport au robot de cuisine (1) .

6. Robot de cuisine selon l'une des revendications précédentes, **caractérisé en ce que** l'émission en ce qui concerne sa direction pour une propagation sonore dirigée relativement à l'utilisateur est réglable par rapport à un axe zéro (N).

7. Robot de cuisine selon l'une des revendications précédentes, **caractérisé en ce qu'**une émission est susceptible d'être déclenchée par une réponse d'un détecteur de mouvement (16) agencé dans le robot de cuisine (1).

8. Robot de cuisine selon l'une des revendications précédentes, **caractérisé en ce que** l'émission par le haut-parleur (11) est susceptible d'être déclenchée par contact ou manipulation d'un élément de commande du robot de cuisine (1).

9. Robot de cuisine selon l'une des revendications précédentes, **caractérisé en ce qu'**une émission est susceptible d'être déclenchée en fonction d'un état de fonctionnement spécifique du robot de cuisine (1).
